# EUROPEAN PATENT APPLICATION

(11) **EP 4 661 259 A1**
(43) Date of publication of application: **10.12.2025**
(21) Application number: 23919851.8
(22) Date of filing: 20.10.2023
(51) Int. Cl.: H02K 11/40, B60L 15/00, F16H 57/021

(54) **UNIT**

(30) Priority: 01.02.2023 JP 2023013878
(71) Applicant: Jatco Ltd., Shizuoka 417-8585 (JP)
(72) Inventor: KAMIYAMA, Akira, Fuji-shi, Shizuoka 417-8585 (JP); UEHARA, Hiroki, Fuji-shi, Shizuoka 417-8585 (JP); SHOICHI, Minoru, Fuji-shi, Shizuoka 417-8585 (JP)
(74) Representative: Hoefer & Partner Patentanwälte mbB
(86) International application number: PCT/JP2023/037975
(87) International publication number: WO 2024/161716

(57) **Abstract**

[PROBLEMS] To provide a layout structure of a grounding body that contributes to downsizing of a unit.

[SOLUTIONS] A unit includes a housing configured to accommodate an inverter, a rotating electrical machine, a shaft connected downstream of the rotating electrical machine, and a grounding body in contact with the shaft. The housing has a peripheral wall surrounding the inverter, and the grounding body is located at an inner side of the peripheral wall.

## Description

### TECHNICAL FIELD

The present invention relates to a unit.

### BACKGROUND ART

Patent Documents 1 to 4 disclose a unit in which a grounding brush is provided on a shaft constituting a power transmission mechanism.

### PRIOR ART DOCUMENT

### PATENT DOCUMENT

Patent Document 1: JP2012-110149A
Patent Document 2: JP2018-170829A
Patent Document 3: JP2018-167653A
Patent Document 4: JP2018-11441A

### SUMMARY OF INVENTION

### PROBLEM TO BE SOLVED BY THE INVENTION

However, in the units described in Patent Documents 1 to 4, the unit cannot be sufficiently downsized only by providing the grounding brush on the shaft.

The present invention has been made in view of such circumstances, and an object thereof is to provide a layout structure of a grounding body that contributes to downsizing of a unit.

### MEANS FOR SOLVING THE PROBLEM

According to an aspect of the present invention, there is provided a unit including: a housing configured to accommodate an inverter, a rotating electrical machine, a shaft connected downstream of the rotating electrical machine, and a grounding body in contact with the shaft, in which the housing has a peripheral wall surrounding the inverter, and the grounding body is located at an inner side of the peripheral wall.

### EFFECT OF THE INVENTION

According to this aspect, it is possible to provide a layout structure of the grounding body contributing to downsizing of the unit.

### BRIEF DESCRIPTION OF DRAWINGS

[FIG. 1] FIG. 1 is a schematic configuration diagram of a unit according to the present embodiment.
[FIG. 2] FIG. 2 is an external diagram of the unit.
[FIG. 3] FIG. 3 is an external diagram of the unit in a state where a second cover is removed.
[FIG. 4] FIG. 4 is a diagram of the unit in a state where the second cover is removed as viewed from a reduction mechanism side.
[FIG. 5] FIG. 5 is a plan view of the unit in a state where a third cover and an inverter are removed.
[FIG. 6] FIG. 6 is a schematic configuration diagram of a main part of the unit.

### DESCRIPTION OF EMBODIMENTS

Hereinafter, an embodiment of the present invention (hereinafter, also simply referred to as present embodiment) will be described with reference to the accompanying drawings. In the present specification, the same elements are denoted by the same reference numerals throughout the whole.

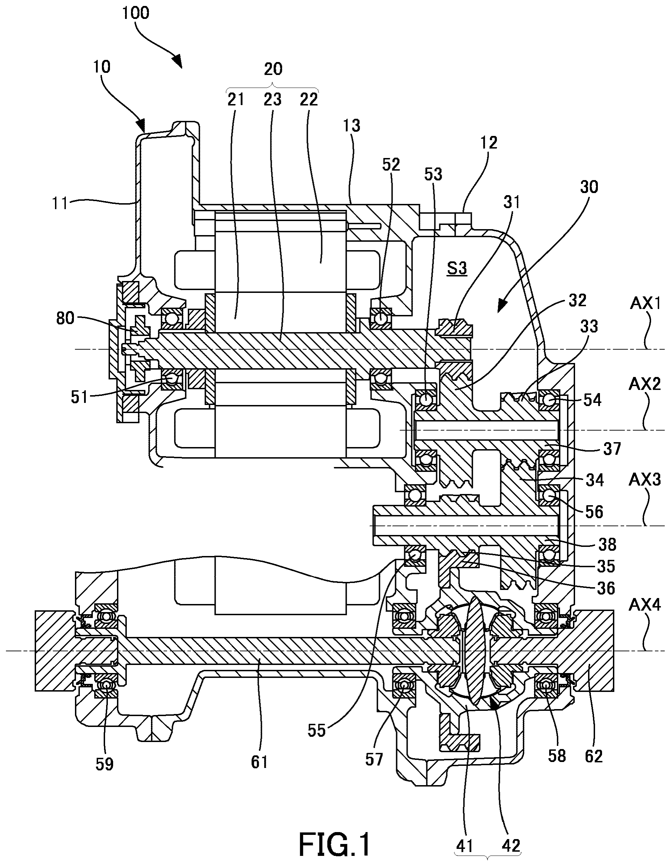

First, an overall configuration of a unit 100 according to the present embodiment will be described with reference to FIGS. 1 to 4.

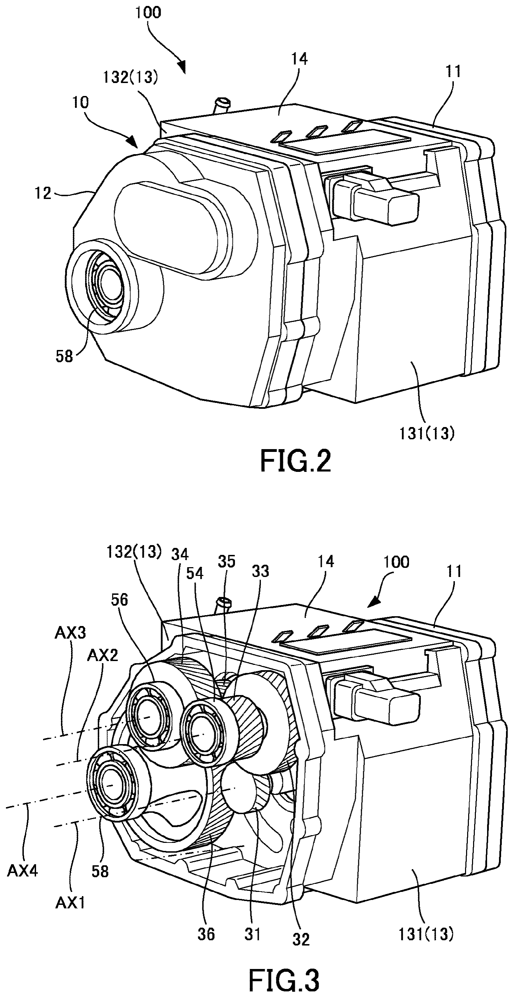

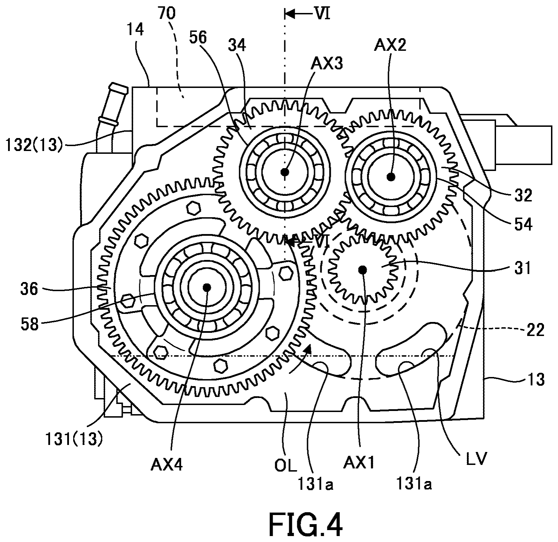

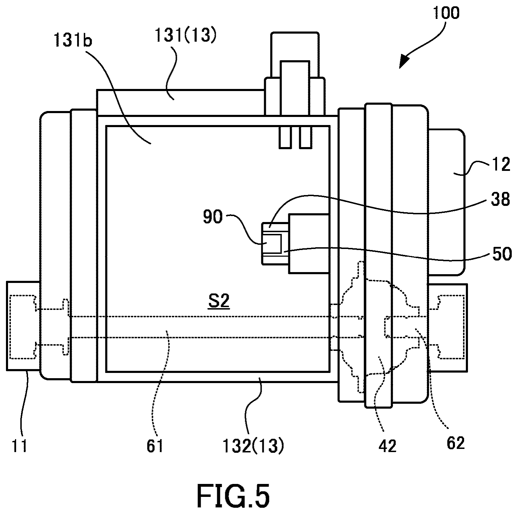

FIG. 1 is a schematic configuration diagram of the unit 100 according to the present embodiment, and specifically, a schematic exploded view illustrating a connection relation of members of the unit 100. FIG. 2 is an external diagram of the unit 100. FIG. 3 is an external diagram of the unit 100 in a state where a second cover 12 is removed. FIG. 4 is a diagram of the unit 100 in a state where the second cover 12 is removed as viewed from a reduction mechanism 30 side. FIG. 5 is a plan view of the unit 100 in a state where a third cover 14 and an inverter 70 are removed, and specifically, a view when viewed from an intersection direction (in other words, radial direction) intersecting an axial direction. In each of FIG. 2 to FIG. 4, an up-down direction corresponds to the direction of gravity.

Regarding the term of "unit", the unit can also be referred to as, for example, a motor unit (unit including at least motor) or a power transmission device (device including at least power transmission mechanism). The motor is a rotating electrical machine having an electric motor function and/or a generator mechanism (at least one of electric motor function and generator mechanism). The power transmission mechanism is, for example, a gear mechanism and/or a differential gear mechanism. A device (unit) including a motor and a power transmission mechanism is included in concepts of both the motor unit and the power transmission device.

As illustrated in FIGS. 1 to 5, the unit 100 includes a housing 10, a rotating electrical machine 20, a reduction mechanism 30 as the power transmission mechanism, a differential gear mechanism 40, and the inverter 70. The unit 100 is mounted on a vehicle, and the vehicle is an electric vehicle.

The housing 10 includes a first cover 11, the second cover 12, a case 13, and the third cover 14. The rotating electrical machine 20, the reduction mechanism 30, the differential gear mechanism 40, and the inverter 70 are accommodated in the housing 10. The case 13 includes a case body 131 and a peripheral wall 132 provided above the case body 131. The terms "above" and "below" refer to disposing that appears to overlap in the direction of gravity when viewed in a predetermined direction including the axial direction and a radial direction. For example, when a first element overlaps a second element in the direction of gravity when viewed in the axial direction, if a position of the first element is higher than that of the second element, the first element is above the second element. In this case, the first element and the second element may overlap each other or be offset when viewed in the radial direction.

The first cover 11 closes an opening on one side of the case body 131 from one side in the axial direction (left side in FIG. 1), and the second cover 12 closes the opening on the other side of the case body 131 from the other side in the axial direction. The rotating electrical machine 20 and the inverter 70 are accommodated in the case 13 in a separated state. The rotating electrical machine 20 is accommodated in a rotating electrical machine accommodating chamber S1 formed by the case body 131, and the inverter 70 is accommodated in an inverter accommodating chamber S2 formed by the peripheral wall 132. In other words, the inverter 70 is surrounded by the peripheral wall 132. The third cover 14 covers an opening of the peripheral wall 132. The differential gear mechanism 40 is accommodated in a differential gear mechanism accommodating chamber S3 formed by the second cover 12 and the case 13.

The inverter 70 is surrounded by the peripheral wall 132 to be located above the rotating electrical machine 20. In the present embodiment, the inverter 70 and the rotating electrical machine 20 overlap each other when viewed in the radial direction.

The unit 100 includes oil OL. The oil OL is supplied to the rotating electrical machine 20 in the case 13 from the outside of the housing 10, for example, and lubricates the rotating electrical machine 20. A part of the oil OL supplied to the rotating electrical machine 20 is stored in the housing 10 and is accommodated in the housing 10. The remaining oil OL is discharged to the outside of the housing 10. The oil OL can be circulated inside and outside the housing 10.

As illustrated in FIGS. 4 and 5, the case body 131 has through holes 131a and a bottom portion 131b. The through holes 131a are formed in the case body 131 in portions below a first axis AX1 and a fourth axis AX4 in the direction of gravity, and allow the inside of the second cover 12 to communicate with the inside of the case body 131. Therefore, the oil OL in the case body 131 may flow into the second cover 12 through the through holes 131a, and is also used to lubricate the differential gear mechanism 40. An oil reservoir is formed inside each of the second cover 12 and the case body 131 at a portion in the lower side in the direction of gravity. In a steady circulation state, an oil level LV of the oil reservoir overlaps the through hole 131a, for example, when viewed in the axial direction, and thus in the steady circulation state, the oil reservoir in the second cover 12 and the oil reservoir in the case body 131 has a common height of an oil surface. The bottom portion 131b is a portion of the case body 131 facing the third cover 14.

As illustrated in FIG. 5, the peripheral wall 132 extends from the bottom portion 131b when viewed in an intersection direction (in other words, radial direction) intersecting the axial direction. A shape of the peripheral wall 132 is annular when viewed in the intersection direction. The annular shape means the shape of the peripheral wall 132 surrounding the inverter 70 when viewed in the intersection direction, and includes, for example, a polygonal annular shape, a circular shape, or an elliptical annular shape. In the present embodiment, the shape of the peripheral wall 132 is a quadrangular annular shape (rectangular shape), which is an example of the polygonal annular shape. The inverter accommodating chamber S2 is a space surrounded by the peripheral wall 132, the bottom portion 131b, and the third cover 14.

The steady circulation state is a state in which circulation of the oil OL is steady, and is considered as a state in which, for example, in a case where circulation of oil is performed using a pump, the oil level LV is stabilized during a pump operation. The circulation of oil may be performed by scraping up the oil OL by a rotating member such as a gear in the housing 10. In this case, the steady circulation state is considered as a state in which the oil level LV is stabilized during rotation of the rotating member.

The oil level LV is set to a height at which a stator 22 is immersed in the oil OL in the steady circulation state, and the oil OL does not enter a gap (air gap) between a rotor 21 and the stator 22. This is because, when the oil OL enters the air gap, a rotation resistance of the rotating electrical machine 20 increases rapidly, while the stator 22 is desired to be cooled. Therefore, the oil level LV is set as described above, so that the oil OL comes into contact with a coil end of the stator 22.

Returning to FIG. 1, the rotating electrical machine 20 includes the rotor 21, the stator 22, and a rotating shaft 23, and constitutes a drive source for a vehicle. The rotor 21 is provided on an outer periphery of the rotating shaft 23. The stator 22 is provided in the case 13 and accommodates the rotor 21. The rotating shaft 23 rotates integrally with the rotor 21, and protrudes from the rotor 21 toward both sides in the axial direction. The rotating shaft 23 penetrates the first cover 11 at one end side in the axial direction and penetrates the case 13 at the other end side in the axial direction. A bearing 51 is provided on the first cover 11 at a portion through which the rotating shaft 23 penetrates, a bearing 52 is provided on the case 13 at a portion through which the rotating shaft 23 penetrates, and the rotating shaft 23 is supported by the bearing 51 and the bearing 52. A resolver 80 is provided on the rotating shaft 23 at a portion protruding from the first cover 11. The resolver 80 detects the rotation of the rotating electrical machine 20.

The reduction mechanism 30 is a gear mechanism, and includes a first gear 31, a second gear 32, a third gear 33 as a part of a first gear pair, a fourth gear 34 as another part of the first gear pair, a fifth gear 35 as a part of a second gear pair, a sixth gear 36 as another part of the second gear pair, a first shaft 37, and a second shaft 38 as a shaft. The first gear 31 is disposed on the first axis AX1 together with the rotating electrical machine 20. In other words, the rotating electrical machine 20 and the first gear 31 are disposed coaxially with respect to the first axis AX1. In other words, a plurality of elements (components, portions, and the like) being disposed along an N-th axis (N is a natural number) is synonymous with the plurality of elements being disposed coaxially with respect to the N-th axis. Similarly, the second gear 32 and the third gear 33 are disposed on a second axis AX2, and the fourth gear 34 and the fifth gear 35 are disposed on a third axis AX3. The sixth gear 36 and the differential gear mechanism 40 are disposed on the fourth axis.

The first axis AX1, the second axis AX2, the third axis AX3, and the fourth axis AX4 all constitute an axis of the unit 100 and extend along the same direction. Accordingly, extending directions of the first axis AX1, the second axis AX2, the third axis AX3, and the fourth axis AX4 all correspond to the axial direction of the unit 100. That is, the axial direction means an axial direction of a rotating shaft of a component (for example, motor, gear mechanism, and differential gear mechanism) that constitutes a unit. The radial direction of the unit 100 is a direction orthogonal to the first axis AX1, the second axis AX2, the third axis AX3, or the fourth axis AX4. The first axis AX1 constitutes an axis of the rotating shaft 23, the second axis AX2 constitutes an axis of the first shaft 37, the third axis AX3 constitutes an axis of the second shaft 38, and the fourth axis AX4 constitutes an axis of the differential gear mechanism 40.

The first gear 31 is connected downstream of the rotating electrical machine 20. The downstream is a power output side, and regarding the rotating electrical machine 20, the rotor 21 and the stator 22 that generate power are used as references. Therefore, in other words, the downstream of the rotating electrical machine 20 can also be said to be the downstream of the stator 22. Alternatively, the rotating shaft 23 does not need to be understood as a component of the rotating electrical machine 20 in terms of a positional relation in power transmission. The downstream is the power output side, whereas the upstream is a power input side.

The first gear 31 is connected downstream of the rotating electrical machine 20 to be capable of transmitting power. The connection may be a connection performed via other configurations (for example, clutch or another gear mechanism). The first gear 31 is provided at the other side in the axial direction of the rotor 21 and is provided at the rotating shaft 23 at a portion protruding from the case 13. The first gear 31 is press-fitted into the rotating shaft 23 and is integrated with the first gear 31. Accordingly, the first gear 31 can rotate integrally with the rotating shaft 23.

The second gear 32 meshes with the first gear 31. The second gear 32 has a larger number of teeth than that of the first gear 31, and constitutes a first reduction gear stage together with the first gear 31. The second gear 32 is provided at the first shaft 37 and is disposed on the second axis AX2. The second gear 32 is formed integrally with the first shaft 37. The first shaft 37 extends along the rotating shaft 23. The first shaft 37 is supported by a bearing 53 provided at the case 13 and a bearing 54 provided at the second cover 12. The bearing 53 and the bearing 54 are disposed at both ends of the first shaft 37.

The third gear 33 is connected downstream of the second gear 32. The third gear 33 is provided at the first shaft 37 and is disposed on the second axis AX2. The third gear 33 is provided at the first shaft 37 at a portion extending in a direction away from the rotating electrical machine 20 than the second gear 32, that is, extending on the other side in the axial direction. The third gear 33 is formed integrally with the first shaft 37. The second gear 32 and the third gear 33 are disposed between the bearing 53 and the bearing 54 in the axial direction.

The fourth gear 34 meshes with the third gear 33. The fourth gear 34 has a larger number of teeth than the third gear 33, and constitutes a second reduction gear stage together with the third gear 33. The fourth gear 34 is provided at the second shaft 38 and is disposed on the third axis AX3. The fourth gear 34 is formed integrally with the second shaft 38. The second shaft 38 extends along the rotating shaft 23. The second shaft 38 is supported by a bearing 55 provided at the case 13 and a bearing 56 provided at the second cover 12. The bearing 55 and the bearing 56 are disposed at both ends of the second shaft 38.

As illustrated in FIG. 5, the unit 100 further includes a grounding brush 50. The grounding brush 50 is in contact with a distal end of the second shaft 38. Details of the grounding brush 50 will be described later.

The fifth gear 35 is connected downstream of the fourth gear 34. The fifth gear 35 is provided at the second shaft 38 and is disposed on the third axis AX3. The fifth gear 35 is provided at the second shaft 38 at a portion extending in a direction closer to the rotating electrical machine 20 than the fourth gear 34, that is, extending on the one side in the axial direction. Therefore, a power transmission direction at the second shaft 38 is turned back to an opposite side in the axial direction as compared with the first shaft 37. The fifth gear 35 is formed integrally with the second shaft 38. The fourth gear 34 and the fifth gear 35 are disposed between the bearing 55 and the bearing 56 in the axial direction.

The sixth gear 36 meshes with the fifth gear 35. The sixth gear 36 is a final gear and is provided on the differential gear mechanism 40. The sixth gear 36 is disposed on the fourth axis AX4 together with the differential gear mechanism 40. The power from the rotating electrical machine 20 is transmitted from the sixth gear 36 to the differential gear mechanism 40. Accordingly, the differential gear mechanism 40 is connected downstream of the sixth gear 36.

The sixth gear 36 overlaps the first gear 31 when viewed in the radial direction. In other words, the first gear 31 has a portion that overlaps the sixth gear 36 when viewed in the radial direction. For example, the portion overlaps the sixth gear 36 when viewed in the radial direction along a plane including the first axis AX1 and the fourth axis AX4. The expression of "overlap each other when viewed in a predetermined direction including a radial direction and an axial direction" means overlapping each other in the predetermined direction, and means that a plurality of elements are aligned in the predetermined direction. Therefore, when a drawing illustrates that a plurality of elements are aligned in a predetermined direction, it may be assumed that the description contains a sentence explaining that the plurality of elements overlap when viewed in the predetermined direction.

In a case where the sixth gear 36 overlaps the first gear 31 when viewed in the radial direction, the power transmission direction is turned back, by the second shaft 38, to the opposite side in the axial direction as compared with the first shaft 37 as described above. Therefore, in the case where the sixth gear 36 overlaps the first gear 31 when viewed in the radial direction, a dimension in the axial direction is reduced.

The sixth gear 36 has a larger number of teeth than the fifth gear 35, and constitutes a third reduction gear stage together with the fifth gear 35. Therefore, in the reduction mechanism 30, three-stage reduction is performed by the first gear 31 and the second gear 32, the third gear 33 and the fourth gear 34, and the fifth gear 35 and the sixth gear 36. Accordingly, in order to ensure a reduction ratio, a reduction gear diameter may be made smaller than that in a case of one-stage reduction or even two-stage reduction. As a result, layout constraints such as limitations on compactness of the unit 100 due to necessity of ensuring an inter-axis distance corresponding to a large reduction gear diameter are alleviated.

That is, in the unit 100, three gear stages can be formed by four axes, that is, the first axis AX1 to the fourth axis AX4, and the number of gear stages can be increased as compared with the case of one-stage shifting or two-stage shifting. By increasing the number of gear stages, the diameter of each gear can be made smaller to implement a predetermined gear ratio. As a result, a factor of layout constraints caused by excessively large gears can be alleviated. Therefore, the layout property of the unit 100 can be improved.

In the reduction mechanism 30, the third gear 33 and the fourth gear 34 are disposed in a direction away from the stator 22 than the first gear 31, the second gear 32, the fifth gear 35, and the sixth gear 36. That is, the four gears, that is, the first gear 31, the second gear 32, the fifth gear 35, and the sixth gear 36, are moved toward the stator 22, and the remaining two gears, that is, the third gear 33 and the fourth gear 34, are moved away from the stator 22. Accordingly, a space is formed around the above two gears, that is, on an end side of the unit 100. Therefore, an end of the unit 100 may be recessed to reduce the size, or components may be placed in the space on the end side of the unit 100, thereby increasing a degree of freedom of layout.

The differential gear mechanism 40 includes a differential case 41 and a differential gear 42. The differential case 41 is supported by a bearing 57 provided at the case 13 and a bearing 58 provided at the second cover 12, and rotates together with the sixth gear 36. The sixth gear 36 is coaxially fixed to an outer wall of the differential case 41, and the differential case 41 accommodates the differential gear 42. The differential gear 42 distributes and outputs the power input to the differential case 41 via the sixth gear 36 to drive wheels in a left-right direction of the vehicle.

The differential gear mechanism 40 protrudes in a direction away from the stator 22 with respect to the sixth gear 36. The differential gear mechanism 40 protrudes to have a portion, serving as a protruding portion, which protrudes more in the axial direction from the sixth gear 36. In other words, the differential gear mechanism 40 protrudes more in a direction away from the stator 22 than in a direction toward the stator 22 with respect to the sixth gear 36, and is disposed in the direction away from the stator 22 with respect to the sixth gear 36.

Accordingly, the differential gear mechanism 40 is disposed in a space on an end side of the unit 100 formed according to the gear disposing of the reduction mechanism 30. Therefore, as described above, the reduction in the dimension of the reduction mechanism 30 in the axial direction and the reduction in the gear diameter due to adoption of three-stage reduction allow the unit 100 to be made compact suitably. As a result, the layout property of the unit 100 is further improved.

The bearing 57 and the bearing 58 are disposed on both sides in the axial direction with respect to the differential gear mechanism 40. As a result, the bearing 53, the bearing 55, and the bearing 57 are disposed on the one side in the axial direction, and the bearing 54, the bearing 56, and the bearing 58 are disposed on the other side in the axial direction with respect to each gear of the reduction mechanism 30 and the differential gear mechanism 40. Therefore, rigidity of the housing 10 is easily ensured, which is advantageous in terms of sound and vibration performance. In addition, since bearing retaining holes can be machined together on the one side in the axial direction and on the other side in the axial direction, it becomes easier to align centers among the three rotating members, that is, the first shaft 37, the second shaft 38, and the differential gear mechanism 40. Furthermore, since each gear of the reduction mechanism 30 and the bearings 53 to 58 are disposed together on the other side in the axial direction with respect to the stator 22, it becomes easier to dispose the resolver 80 from the one side in the axial direction with respect to the rotating shaft 23, and the rotating electrical machine 20 is also easily assembled.

On the differential gear 42, a first drive shaft 61 serving as a drive shaft is attached from the one side in the axial direction, and a second drive shaft 62 is attached from the other side in the axial direction. The power from the rotating electrical machine 20 is transmitted from the differential gear 42 to one drive wheel via the first drive shaft 61 and to the other drive wheel via the second drive shaft 62. The first drive shaft 61 is longer than the second drive shaft 62, so that a distance between the drive wheel and the differential gear mechanism 40 can be increased, thereby limiting a bending angle. The first drive shaft 61 is supported by a bearing 59 provided at the first cover 11.

The sixth gear 36 may also be understood as a part of the differential gear mechanism 40. That is, the sixth gear 36 may also be understood as a component of the differential gear mechanism 40. In this case, it can also be understood that the differential gear mechanism 40 is connected downstream of the sixth gear 36 in such a manner that a part of the differential gear mechanism 40 including the differential gear 42 that outputs the power from the rotating electrical machine 20 is connected downstream of the sixth gear 36.

As illustrated in FIGS. 3 and 4, the first axis AX1 and the fourth axis AX4 are disposed at a lower side with respect to the second axis AX2 and the third axis AX3 when viewed in the axial direction. An upper side and the lower side refer to an up-down relation in the direction of gravity when viewed in the predetermined direction including the axial direction and the radial direction, and include "above" and "below". Regarding the terms of "above" and "below", the upper side and the lower side further include a positional relation of being obliquely above and obliquely below when viewed in the predetermined direction including the axial direction and the radial direction. Therefore, for example, when the first element is located obliquely above the second element without overlapping the second element in the direction of gravity when viewed in the axial direction, and the first element and the second element do not overlap when viewed in the radial direction, the first element is located at the upper side of the second element.

As a result of being disposed as described above, a layout in which the first axis AX1 and the fourth axis AX4 are disposed in a manner of being concentrated on the lower side of the unit 100 in the direction of gravity is implemented. Accordingly, the oil OL scattered by the rotation of the sixth gear 36, which is the downstream gear, is easily guided to the rotating electrical machine 20, resulting in a layout that allows for appropriate oil lubrication. The oil OL can be guided to the rotating electrical machine 20 through the through hole 131a as illustrated by an arrow in FIG. 4.

Since the rotating electrical machine 20 disposed on the first axis AX1 is disposed on the lower side in the direction of gravity, it is possible to provide a space above the rotating electrical machine 20. Therefore, it is possible to dispose the inverter 70 above the rotating electrical machine 20 and bring the inverter 70 close to the rotating electrical machine 20 while preventing the dimension in the radial direction from increasing. As a result, the unit 100 is more compact than that in a case where the rotating electrical machine 20 is disposed on the upper side in the direction of gravity and the inverter 70 is further disposed above the rotating electrical machine 20, and the layout property of the unit 100 is improved.

Furthermore, when the rotating electrical machine 20 is disposed on the upper side in the direction of gravity, and the inverter 70, which is a high-voltage component, is disposed below the rotating electrical machine 20, there is a concern that a leakage current due to damage may occur, but such a concern does not exist. A leakage current due to damage may occur, for example, when the inverter 70 is crushed by a heavy object including the rotating electrical machine 20 during a vehicle collision, or when an impact load is applied to the inverter 70 when the bottom of the vehicle is hit.

In the unit 100, the gear diameter is reduced by adopting the three-stage reduction as described above, and as a result, the layout restrictions are alleviated. Therefore, a relative height of an oil surface of the oil reservoir for each of the rotating electrical machine 20 and the differential gear mechanism 40 is easily set appropriately by respectively disposing the rotating electrical machine 20 and the differential gear 40.

In this case, the height of the oil surface may be set more appropriately for the differential gear mechanism 40 by relatively raising the height of the oil surface of the oil reservoir in the second cover 12 (thus lowering position of differential gear mechanism 40). In addition, the height of the oil surface may be set more appropriately for the rotating electrical machine 20 by relatively lowering the height of the oil surface of the oil reservoir in the case 13 (thus raising position of rotating electrical machine 20) in order to prevent the entry of the oil OL into the air gap between the rotor 21 and the stator 22. From this perspective, in the unit 100, the first axis AX1 is disposed at an upper side of the fourth axis AX4.

Next, a configuration of main parts of the unit 100 will be described with reference to FIGS. 1 to 6.

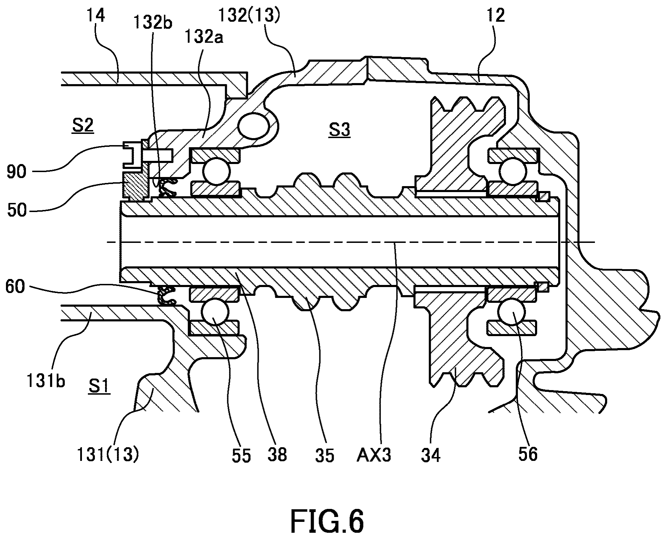

FIG. 6 is a schematic configuration diagram of the main parts of the unit 100, and is a cross-sectional view taken along line VI-VI in FIG. 4. In FIG. 6, the up-down direction corresponds to the direction of gravity.

As illustrated in FIG. 6, the peripheral wall 132 includes an opposing wall 132a opposing the second cover 12 and an opening 132b formed in the opposing wall 132a. In the present embodiment, the opening 132b is surrounded by the opposing wall 132a and the bottom portion 131b. The second shaft 38 is supported by the bearing 55 and the bearing 56 such that a distal end thereof penetrates the opening 132b and enters the inverter accommodating chamber S2.

As illustrated in FIGS. 5 and 6, the grounding brush 50 is a grounding body for electrically grounding the second shaft 38. The grounding brush 50 is provided such that a distal end thereof is in contact with the second shaft 38 (specifically, outer peripheral surface of distal end of second shaft 38). Specifically, the grounding brush 50 is fixed, by the bolt 90, to the opposing wall 132a (specifically, region of opposing wall 132a located on outer peripheral side of opening 132b) to be located in the inverter accommodating chamber S2 which is the inner side of the peripheral wall 132. In other words, the grounding brush 50 comes into contact with the distal end of the second shaft 38 penetrating the opening 132b and entering the inverter accommodating chamber S2. Accordingly, the grounding brush 50 in contact with the second shaft 38 is disposed by using the space in the inverter accommodating chamber S2 surrounded by the peripheral wall 132, so that the layout property is improved, which contributes to downsizing of the unit 100.

The grounding brush 50 is located between the second shaft 38 and the third cover 14. Accordingly, it is easy to lay out the grounding brush 50 as compared with a case where the grounding brush 50 is located between the second shaft 38 and the case body 131 (specifically, bottom portion 131b).

As illustrated in FIG. 6, the unit 100 further includes an oil seal 60 as a sealing member. The distal end of the second shaft 38 is sealed by the oil seal 60 at the opening 132b. In other words, the oil seal 60 is provided between an inner peripheral surface of the opening 132b and an outer peripheral surface of the second shaft 38 to be located between the bearing 55 and the grounding brush 50. Accordingly, the oil OL in the differential gear mechanism accommodating chamber S3 can be prevented from adhering to the grounding brush 50 through the opening 132b. The oil seal 60 is not limited to the shape illustrated in FIG. 6, and may be, for example, an O-ring.

The second shaft 38 in contact with the grounding brush 50 is connected downstream of the rotating electrical machine 20 via the first gear pair including the third gear 33 and the fourth gear 34, and the differential gear 42 is connected downstream of the second shaft 38 via the second gear pair including the fifth gear 35 and the sixth gear 36. Accordingly, the second shaft 38 having a more loose layout restriction than the rotating shaft 23 on the power input side and the differential gear 42 on the power output side is used as a shaft in contact with the grounding brush 50, so that the layout property is improved, which contributes to downsizing of the unit 100.

As illustrated in FIG. 3, when viewed in the intersection direction (that is, radial direction) intersecting the axial direction, the first drive shaft 61 has a portion overlapping the inverter accommodating chamber S2, which is a space surrounded by the peripheral wall 132 (see FIG. 1). Accordingly, by configuring the inverter accommodating chamber S2 surrounded by the peripheral wall 132 using the space around the first drive shaft 61, the volume of the inverter accommodating chamber S2 can be increased, and thus the degree of freedom of layout of various components including the grounding brush 50 in the inverter accommodating chamber S2 can be improved.

Next, main functions and effects of the present embodiment will be described.
(1) The unit 100 according to the present embodiment including: the housing 10 configured to accommodate the inverter 70, the rotating electrical machine 20, the second shaft 38 (shaft) connected downstream of the rotating electrical machine 20, and the grounding brush 50 (grounding body) in contact with the second shaft 38 (shaft), in which the housing 10 includes the peripheral wall 132 surrounding the inverter 70, and the grounding brush 50 (grounding body) is located at an inner side of the peripheral wall 132.
   According to this configuration, the grounding brush 50 in contact with the second shaft 38 is disposed by using a space in the inverter accommodating chamber S2 surrounded by the peripheral wall 132, so that the layout property is improved, which contributes to downsizing of the unit 100.
(2) In the present embodiment, the second shaft 38 (shaft) being connected downstream of the rotating electrical machine 20 via the third gear 33 and the fourth gear 34 (first gear pair), the unit 100 further including: the differential gear 42 connected downstream of the second shaft 38 (shaft) via the fifth gear 35 and the sixth gear 36 (second gear pair).
   According to this configuration, the second shaft 38 having a more loose layout restriction than the rotating shaft 23 on a power input side and the differential gear 42 on a power output side is used as a shaft in contact with the grounding brush 50, so that the layout property is improved, which contributes to downsizing of the unit 100.
(3) In the present embodiment, the unit 100 including: the differential gear 42 connected downstream of the second shaft 38 (shaft); and the first drive shaft 61 (drive shaft) connected downstream of the differential gear 42, in which the first drive shaft 61 (drive shaft) has a portion that overlaps a space surrounded by the peripheral wall 132 when viewed in an intersection direction intersecting an axial direction.
   According to this configuration, the inverter accommodating chamber S2 surrounded by the peripheral wall 132 is implemented by using the space around the first drive shaft 61, so that the volume of the inverter accommodating chamber S2 can be increased, and thus the degree of freedom of layout of various components including the grounding brush 50 in the inverter accommodating chamber S2 can be improved.
(4) In the present embodiment, the peripheral wall 132 has the opening 132b, and the second shaft 38 (shaft) is sealed by the oil seal 60 (sealing member) at the opening 132b.

According to this configuration, the oil OL in the differential gear mechanism accommodating chamber S3 can be prevented from adhering to the grounding brush 50 through the opening 132b.

Although the embodiment of the present invention has been described above, the above embodiment is merely a part of application examples of the present invention, and is not intended to limit the technical scope of the present invention to the specific configurations of the above embodiment.

### DESCRIPTION OF REFERENCE SIGNS

- 10: housing
- 20: rotating electrical machine
- 38: second shaft (shaft)
- 42: differential gear
- 50: grounding brush (grounding body)
- 60: oil seal (sealing member)
- 61: first drive shaft (drive shaft)
- 70: inverter
- 100: unit
- 132: peripheral wall
- 132b: opening

## Claims

1. A unit comprising:
a housing configured to accommodate
an inverter,
a rotating electrical machine,
a shaft connected downstream of the rotating electrical machine, and
a grounding body in contact with the shaft, wherein
the housing has a peripheral wall surrounding the inverter, and
the grounding body is located at an inner side of the peripheral wall.

2. The unit according to claim 1,
the shaft being connected downstream of the rotating electrical machine via a first gear pair,
the unit further comprising:
a differential gear connected downstream of the shaft via a second gear pair.

3. The unit according to claim 1, further comprising:
a differential gear connected downstream of the shaft; and
a drive shaft connected downstream of the differential gear, wherein
the drive shaft has a portion that overlaps a space surrounded by the peripheral wall when viewed in an intersection direction intersecting an axial direction.

4. The unit according to any one of claims 1 to 3, wherein
the peripheral wall has an opening, and
the shaft is sealed by a sealing member at the opening.
